(19) Europäisches Patentamt
European Patent Office
Office européen des brevets

(11) **EP 3 830 650 B1**

(12) **EUROPÄISCHE PATENTSCHRIFT**

(45) Veröffentlichungstag und Bekanntmachung des Hinweises auf die Patenterteilung:
**18.10.2023 Patentblatt 2023/42**

(21) Anmeldenummer: **19737064.6**

(22) Anmeldetag: **04.07.2019**

(51) Internationale Patentklassifikation (IPC):
**B64G 1/28** *(2006.01)* **G05B 13/04** *(2006.01)*
**B64G 1/24** *(2006.01)*

(52) Gemeinsame Patentklassifikation (CPC):
**G05B 13/048; B64G 1/244; B64G 1/245; B64G 1/285**

(86) Internationale Anmeldenummer:
**PCT/EP2019/067958**

(87) Internationale Veröffentlichungsnummer:
**WO 2020/025249 (06.02.2020 Gazette 2020/06)**

(54) **STEUERUNGSSYSTEM UND -VERFAHREN ZUM REGELN EINER DRALLRADEINRICHTUNG ZUR STABILISIERUNG EINES RAUMFLUGKÖRPERS**

CONTROL SYSTEM AND CONTROL METHOD FOR CONTROLLING A MOMENTUM WHEEL DEVICE FOR STABILISING A SPACECRAFT

SYSTÈME ET PROCÉDÉ DE COMMANDE POUR LA RÉGULATION D'UN DISPOSITIF DE VOLANT D'INERTIE DESTINÉ À STABILISER UN ENGIN SPATIAL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.07.2018 DE 102018118480**

(43) Veröffentlichungstag der Anmeldung:
**09.06.2021 Patentblatt 2021/23**

(73) Patentinhaber: **Rockwell Collins Deutschland GmbH**
**69123 Heidelberg (DE)**

(72) Erfinder: **EHINGER, Markus**
**69469 Weinheim (DE)**

(74) Vertreter: **Müller Hoffmann & Partner Patentanwälte mbB**
**St.-Martin-Strasse 58**
**81541 München (DE)**

(56) Entgegenhaltungen:
**DE-A1- 3 214 378    DK-T3- 3 643 621**
**FR-A1- 3 094 479**

- **GALVAN E ET AL: "ASIC implementation of a digital tachometer with high precision in a wide speed range", IEEE TRANSACTIONS ON INDUSTRIAL ELECTRONICS, IEEE SERVICE CENTER, PISCATAWAY, NJ, USA, vol. 43, no. 6, 1 December 1996 (1996-12-01), pages 655-660, XP011216832, ISSN: 0278-0046, DOI: 10.1109/41.544553**
- **Anonymous: "Running run two DC motors in perfect synchronisation | PICAXE Forum", , 6 December 2007 (2007-12-06), XP055745150, Retrieved from the Internet: URL:https://picaxeforum.co.uk/threads/running-run-two-dc-motors-in-perfect-synchronisation.8343/ [retrieved on 2020-10-29]**

EP 3 830 650 B1

**Beschreibung**

Die Erfindung betrifft ein Steuerungssystem und ein Steuerungsverfahren für eine Drallradeinrichtung zur Lagestabilisierung eines Raumflugkörpers, insbesondere zur Lageregelung von Satelliten.

Derartige Drallradeinrichtungen bzw. Schwung- oder Reaktionsräder sind bekannt, um die Ausrichtung von Satelliten zu kontrollieren. Das Drallrad wird durch einen Antrieb in Rotation versetzt, so dass durch die Kreiselwirkung ein stabilisierender Effekt erreicht werden kann. Um einen wirksamen Kreiseleffekt zu erzielen, ist es zweckmäßig, einen möglichst großen Teil der Masse des Schwungrads möglichst weit außen zu positionieren, so dass diese Masse mit möglichst großem Durchmesser um die Drehachse des Schwungrads (Drallrads) rotieren kann.

Aus der DE 39 21 765 A1 ist eine derartige Drallradvorrichtung bekannt, die - ähnlich dem Rad eines Fahrrads - einen innenliegenden Stator, einen außenliegenden Rotor und eine den Rotor mittels Speichen auf dem Stator drehbar tragende Nabe aufweist. Die Nabe ist durch zwei Wälzlager auf dem Stator drehbar abgestützt, die als Fest- und Loslager gestaltet sein können. DE3214378 A1 offenbart eine alternative Konfiguration einer Drallradvorrichtung, wobei ein Drallverlust kompensiert wird, indem die Drehgeschwindigkeit eines ideales Drallrads zu der Drehgeschwindigkeit des reales Drallrads verglichen wird.

Die Rotationsbewegung des eigentlichen Drallrads (z.B. mit dem Rotor, den Speichen und der Nabe) wird mit Hilfe eines entsprechend angesteuerten Antriebsmotors bewirkt. Im Folgenden werden die Begriffe "Drallrad" und "Rad" und damit auch zum Beispiel Radgeschwindigkeit und Drallradgeschwindigkeit synonym verwendet.

Drall- oder Reaktionsräder werden üblicherweise über Torque-(Drehmoment-) oder Drehzahlkommandos angesteuert. Eine interne Regelschleife versucht dann, das Kommando so schnell und so genau wie möglich umzusetzen. Dabei ist das Ziel eine möglichst genaue Regelung der Drehzahl.

Die Genauigkeitsanforderungen können dabei extrem hoch sein. So sind Einsatzfälle bekannt, bei denen die Genauigkeit nicht geringer als zum Beispiel 0,005 Umdrehungen pro Minute bei 6.000 Umdrehungen pro Minute sein darf. Die Genauigkeit liegt dann bei ca. $10^{-8}$ Umdrehungen pro Minute.

Bei der Umsetzung der Regelung kommt es aber zwangsläufig zu Abweichungen vom gewünschten Drehverhalten des eigentlichen Drallrads aufgrund von endlichen Regelgeschwindigkeiten, Totzeiten und Verzögerungen. Diese Abweichungen hinsichtlich der Drehzahl oder der Drehposition (Drehwinkel) führen dazu, dass sich die Ausrichtung eines Satelliten nicht exakt so verändert, wie es kommandiert wurde.

Zusätzlich entsteht in den realen Kugellagern der Drallradeinrichtung Reibung durch die Rollbewegung der Kugeln, die Bewegung der Lagerkäfige, die Lagertemperatur und den Schmierzustand der Lager. Diese Reibung ist nicht zeitlich konstant, sondern kann sich statistisch und systematisch ändern. Die statistische Änderung der Lagerreibung, insbesondere bei Reibspitzen, kann Störungen der Drehzahlregelung bewirken, die zu kurzzeitigen Abweichungen der Drehzahl führen. Eine abweichende Drehzahl wiederum führt unmittelbar dazu, dass die gewünschte Drehposition bzw. der Drehwinkel des Drallrads nicht erreicht wird.

Es sind Drallradeinrichtungen für Satelliten bekannt, die eine Motorsteuerung mit einer entsprechenden Motorstromregelung aufweisen, die ihrerseits über eine Drehzahlregelung für das Drallrad angesteuert wird. Eine solche Drehzahlregelung kann zum Beispiel über ein Torque-Kommando (Drehmoment-Kommando) angesteuert werden.

Bei derartigen Drall- und Reaktionsrädern ist somit neben der Motorstromregelung (Motorleistungsstufe) ein Regelalgorithmus vorgesehen, der die Drehzahl regelt. Derartige Regler zeichnen sich durch eine gute Regelung und Stabilisierung der Drehzahl aus. Es kommt aber bei der Regelung zwangsläufig zu Verzögerungen und Abweichungen, die zu einer Abweichung der Ausrichtung eines Satelliten führen können.

Der Erfindung liegt die Aufgabe zugrunde, eine noch weiter verbesserte Regelung für eine Drallradeinrichtung bereitzustellen, mit der nicht nur die gewünschte Drehzahl möglichst genau eingehalten werden kann, sondern mit der auch Fehlstellungen (Drehwinkelabweichungen) des Drallrads vermieden werden können.

Die Aufgabe wird erfindungsgemäß durch ein Steuerungssystem mit den Merkmalen von Anspruch 1 sowie durch ein Steuerungsverfahren mit den Merkmalen des nebengeordneten Anspruchs gelöst. Vorteilhafte Ausgestaltungen sind in den abhängigen Ansprüchen angegeben.

Es wird ein Steuerungssystem für eine Drallradeinrichtung angegeben, wobei die Drallradeinrichtung eine reale Drallradeinrichtung ist und ein von einem Motor angetriebenes Drallrad aufweist. Weiterhin ist eine simulierte Drallradeinrichtung vorgesehen, die das Verhalten eines idealen Drallrads auf der Basis eines idealen physikalischen Modells simuliert. Es ist eine Steuereinrichtung vorgesehen, zum Ansteuern des Motors der realen Drallradeinrichtung, wobei eine Kommandoeinrichtung vorgesehen ist, zum Vorgeben eines Drehmomentkommandos zum Verändern der Drehzahl sowohl der realen Drallradeinrichtung als auch der simulierten Drallradeinrichtung. Es ist eine Drehwinkel-Erfassungseinrichtung vorgesehen, zum Erfassen des realen Drehwinkels der realen Drallradeinrichtung. Weiterhin ist eine Integrationseinrichtung vorgesehen, zum Berechnen eines simulierten Drehwinkels der simulierten Drallradeinrichtung aufgrund des vorgegebenen Drehmoment-Kommandos. Schließlich ist eine Vergleichseinrichtung vorgesehen, zum Vergleichen des realen Drehwinkels und des simulierten Drehwinkels und Erzeugen eines einer Abweichung zwischen dem realen Drehwinkel und dem simulierten Drehwinkel entsprechenden Fehlersignals, wobei das Fehlersignal zu der Steuereinrichtung führbar ist, zum Ansteuern des Motors aufgrund des Fehlersignals, um die Abweichung zu verringern.

Die Benennung der verschiedenen Elemente als "real" dient alleine zur begrifflichen Abgrenzung gegenüber den "simulierten" Komponenten. Die Verwendung des Begriffs "real" erfolgt somit nicht im Sinne von "tatsächlich" oder "exakt".

Demgemäß sind bei dem erfindungsgemäßen Steuerungssystem zwei Drallradeinrichtungen vorgesehen, nämlich die eigentliche reale, körperlich existierende Drallradeinrichtung sowie eine (virtuelle) simulierte Drallradeinrichtung. Während die reale Drallradeinrichtung in der üblichen Weise aufgebaut sein kann und insbesondere einen Motor und ein von dem Motor angetriebenes, entsprechend gelagertes Drallrad aufweist, handelt es sich bei der simulierten Drallradeinrichtung alleine um ein physikalisches (Rechen-)Modell. Diese simulierte Drallradeinrichtung kann somit als "perfektes" Drallrad verstanden werden, das durch die mathematischen bzw. physikalischen Zustandsgleichungen der Drehbewegung ohne Reibung repräsentiert wird. Die simulierte Drallradeinrichtung basiert daher auf idealen Newtonschen Verhältnissen, so dass Reibungsverluste, Messfehler, Messverzögerungen etc. außer Betracht bleiben.

Dabei gilt:

$$\omega_{t1} = \omega_{to} + \alpha_{to} \times \Delta t_1 \qquad (1)$$

wobei $\omega$ die Drehgeschwindigkeit (Winkelgeschwindigkeit bzw. auch Drehzahl), $\Delta t$ ein Zeitinkrement und $\alpha$ die Winkelbeschleunigung ist, die das Drehmoment einschließlich dem Trägheitsmoment umfasst.

Das Trägheitsmoment ist das J aller drehenden Teile des Rads (Lagereinheit + Motorrotor + Schwungmasse). Intern sind verschiedene Trägheitsmomente möglich, da es sich um einen modularen Ansatz handelt, der entsprechend angepasst werden kann. Für die hier zu diskutierende Steuerung werden die Momente immer durch $M = \alpha / J$ umgerechnet. Dadurch werden die Formeln unabhängig von dem konkret verwendeten Rad.

Mithilfe der Integrationseinrichtung ist es möglich, diese Bewegungsgleichung zweimal zu integrieren, bis hin zum Drehwinkel $\varphi$:

$$\varphi = \varphi_{t0} + \omega_{to} \times \Delta t_1 + 0{,}5 \times \alpha_{to} \times \Delta t_1^2 \qquad (2)$$

wobei $\varphi$ der Drehwinkel, $\omega$ die Drehgeschwindigkeit (Winkelgeschwindigkeit), $\Delta t$ ein Zeitinkrement und $\alpha$ das Drehmoment einschließlich dem Trägheitsmoment ist.

Die Berechnung für die simulierte Drallradeinrichtung kann exakt durchgeführt werden. Die zugrundeliegende Software bzw. Elektronik kann also für jeden Zeitpunkt die gewünschte Drehzahl und den Drehwinkel berechnen.

Der Drehwinkel entspricht der Drehstellung bzw. Drehposition des eigentlichen Drallrads bzw. des Motor-Rotors oder der Motorwelle bei der realen Drallradeinrichtung. Die Motorwelle ist mit dem Drallrad fest verbunden, so dass diese Einheit zusammenfassend auch als (reale) Drallradeinrichtung bezeichnet wird.

Bei der simulierten Drallradeinrichtung ergibt sich der Drehwinkel als $\varphi$ gemäß der obigen Formel (2) durch zweifache Integration der Gleichung (1).

Durch die zweifache Integration lässt sich aus dem Drehmoment (Drehmoment-Kommando) über die Drehgeschwindigkeit bzw. Drehzahl der Drehwinkel bei der simulierten Drallradeinrichtung ermitteln. Die die Integration durchführende Integrationseinrichtung ist dabei Teil der simulierten Drallradeinrichtung.

Wichtig ist, dass diese Information zu einer sehr präzisen Zeit vorliegt. Bei einer bevorzugten Ausführungsform wird eine Zeitpräzision besser als 1 $\mu$s gefordert und erreicht. Dies ist notwendig, um Winkelabweichungen auch bei einer überlagerten Drehzahl, die mehrere tausend Umdrehungen pro Minute erreichen kann, präzise auszuwerten.

In der Vergleichseinrichtung werden die beiden Ergebnisse, nämlich der erfasste reale Drehwinkel der realen Drallradeinrichtung und der berechnete simulierte Drehwinkel der simulierten Drallradeinrichtung mit sehr hoher zeitlicher Präzision zusammengeführt. Im Idealfall sind beide Werte identisch, so dass keine Korrekturmaßnahme erforderlich ist. In der Realität aber werden sich immer Abweichungen ergeben, die durch die oben bereits erläuterten Einflussfaktoren (Lagerreibung etc.), aber auch durch Messfehler bei der Drehwinkel-Erfassungseinrichtung bedingt sind.

Die Vergleichseinrichtung kann daher aufgrund z.B. auch nur der zeitlichen Abweichung zwischen den beiden Drehwinkeln ein entsprechendes Fehlersignal erzeugen, das zu der Steuereinrichtung rückgeführt werden kann. Die Steuereinrichtung ist dann in der Lage, durch entsprechende Korrektur den Motor in geeigneter Weise anzusteuern, um die Abweichung zwischen den beiden (dem realen und dem simulierten) Drehwinkel auszugleichen. Auf diese Weise kann ein hervorragender Gleichlauf zwischen der realen Drallradeinrichtung und der idealen simulierten Drallradeinrichtung erreicht werden, nicht nur hinsichtlich der Drehzahl (Drehgeschwindigkeit), sondern auch des Drehwinkels (Drehposition).

Die Kommandoeinrichtung kann ausgebildet sein, um das Drehmoment-Kommando an die Steuereinrichtung für das reale Drallrad, sowie an die simulierte Drallradeinrichtung zu übermitteln. Damit soll sichergestellt werden, dass sowohl die reale Drallradeinrichtung als auch die simulierte Drallradeinrichtung gleichzeitig das Drehmoment-Kommando erhalten und eine Änderung ihres Bewegungsverhaltens einleiten können.

Es kann eine Motorsteuerung vorgesehen sein, die durch die Steuereinrichtung ansteuerbar ist und ihrerseits zum Betreiben des Motors dient. Dabei kann die Motorsteuerung insbesondere auch eine Motorstromregelung umfassen.

Es kann eine Drehgeschwindigkeits-Erfassungseinrichtung vorgesehen sein, zum Erfassen der realen Drehgeschwindigkeit der realen Drallradeinrichtung. Die Drehgeschwindigkeits-Erfassungseinrichtung und die Drehwinkel-Erfassungseinrichtung können auch durch eine gemeinsame Messeinrichtung gebildet werden. Zum Beispiel können einer oder mehrere Sensoren am Motor oder am realen Drallrad vorgesehen sein, die detektieren, wann der Motorrotor, die Motorwelle oder das Drallrad eine bestimmte Stellung erreicht haben. Somit lässt sich einerseits die Drehwinkelstellung in diesem Moment bestimmen. Andererseits kann bei Berücksichtigung der Zeit daraus auch die Drehgeschwindigkeit abgeleitet werden.

Es kann eine die Drehwinkel-Erfassungseinrichtung und die Drehgeschwindigkeit-Erfassungseinrichtung zusammenfassende Beobachtungseinrichtung vorgesehen sein, zum Ermitteln der realen Drehgeschwindigkeit und/oder des realen Drehwinkels der realen Drallradeinrichtung, wobei die Beobachtungseinrichtung ausgebildet ist, um eine Fehlerkorrektur der Drehgeschwindigkeit und/oder des Drehwinkels der realen Drallradeinrichtung durchzuführen. Die Beobachtungseinrichtung schätzt somit auf der Grundlage der gemessenen Drehzahl bzw. des gemessenen Drehwinkels und unter Berücksichtigung weiterer Kenntnisse die tatsächliche Stellung bzw. die tatsächliche Geschwindigkeit des Drallrads.

Die Beobachtungseinrichtung ("observer") ist somit in der Lage, über die einfache Drehgeschwindigkeit- bzw. Drehwinkelerfassung hinaus eine verbesserte Messqualität zu erzielen, indem die Messwerte durch Filter oder Korrekturalgorithmen nachbearbeitet werden. Dabei können zum Beispiel Messverzögerungen aufgrund der verwendeten Sensoren kompensiert (gegengerechnet) werden, damit die ermittelten Messwerte möglichst präzise den tatsächlichen Zustand, also die tatsächliche reale Drehgeschwindigkeit oder den tatsächlichen realen Drehwinkel wiedergeben. Die Beobachtungseinrichtung kann auch weitere physikalische Eigenschaften wie z.B. Lagerreibung und Temperatur abschätzen und zur besseren Vorsteuerung zur Verfügung stellen.

Oben wurde erläutert, dass die Integrationseinrichtung dazu ausgebildet ist, eine zweifache Integration der Zustandsgleichung der Drehbewegung durchzuführen. Darüber hinaus kann die Integrationseinrichtung auch ausgebildet sein, durch eine einfache Integration des vorgegebenen Drehmoment-Kommandos eine simulierte Drehzahl bzw. Drehgeschwindigkeit der simulierten Drallradeinrichtung zu berechnen, wobei eine Drehgeschwindigkeit -Vergleichseinrichtung vorgesehen sein kann, zum Vergleichen der realen Drehgeschwindigkeit und der simulierten Drehgeschwindigkeit und Erzeugen eines einer Abweichung zwischen der realen Drehgeschwindigkeit und der simulierten Drehgeschwindigkeit entsprechenden Drehgeschwindigkeit-Abweichungssignals.

Das bedeutet nichts anderes, als dass das (Zwischen-)Ergebnis der Integrationseinrichtung nach der ersten Integration, nämlich die dadurch ermittelte simulierte Drehzahl bzw. Drehgeschwindigkeit, bereits verwendet wird, um Information zum Beispiel für die Steuereinrichtung zur Verfügung zu stellen. Die Information über die simulierte Drehgeschwindigkeit bzw. der Vergleich zwischen der simulierten Drehgeschwindigkeit und der realen Drehgeschwindigkeit und das daraus resultierende Drehgeschwindigkeit-Abweichungssignal können ebenfalls zur Verbesserung der Ansteuerung verwendet werden.

Schließlich wird ein Steuerungsverfahren zum Ansteuern einer Drallradeinrichtung zum Stabilisieren eines Raumflugkörpers angegeben, mit den Schritten:

- Bereitstellen der Drallradeinrichtung als reale Drallradeinrichtung mit einem von einem Motor angetriebenen Drallrad;
- Bereitstellen einer simulierten Drallradeinrichtung auf der Basis eines idealen physikalischen Modells;
- Gleichzeitiges Zuführen eines Drehmoment-Kommandos zu der realen Drallradeinrichtung und zu der simulierten Drallradeinrichtung zum Ändern ihrer jeweiligen Drehgeschwindigkeit;
- Ansteuern des Motors zum Ändern der Drehgeschwindigkeit in Abhängigkeit von dem zugeführten Drehmoment-Kommando;
- Erfassen eines realen Drehwinkels der realen Drallradeinrichtung;
- Berechnen eines simulierten Drehwinkels der simulierten Drallradeinrichtung durch zweifache Integration des zugeführten Drehmoment-Kommandos;
- Vergleichen des realen Drehwinkels und des simulierten Drehwinkels und Erzeugen eines einer Abweichung zwischen dem realen Drehwinkel und dem simulierten Drehwinkel entsprechenden Fehlersignals; und
- Ansteuern des Motors aufgrund des Fehlersignals, um die Abweichung zu verringern.

Wie oben erläutert, wird erfindungsgemäß das (reale) Drall- bzw. Reaktionsrad über ein Drehmoment-Kommando (Torque-Kommando) angesteuert. Das Drehmoment-Kommando steuert zugleich auch die Simulation eines perfekten Drallrads und den Regler (die Steuereinrichtung) des realen Drallrads an. Die Regelung des realen Drallrads wird nicht nur auf die Einhaltung der Drehzahl eingestellt, sondern auch auf den Parallellauf der Raddrehwinkel, d.h.,

auf einen möglichst geringen Unterschied zwischen den Drehwinkeln des realen Drallrads und des perfekten simulierten Drallrads.

Der Regelfehler wird durch den Unterschied der Drehwinkel zwischen dem simulierten perfekten Rad und der durch einen Observer geschätzten Bewegung des realen Rads ermittelt. Es wird eine Abweichung der Drehzahl zwischen dem simulierten Rad und dem realen Rad zugelassen, um den Unterschied im Raddrehwinkel zwischen dem simulierten Rad und dem beobachteten realen Rad zu minimieren. Oberstes Regelziel ist somit, die Raddrehwinkel der beiden Räder in Einklang zu bringen.

Durch Schranken für die Drehzahlabweichung und die Radwinkelabweichung wird die maximale Ausrichtungsabweichung auf Satellitenebene beschreibbar und vorherberechenbar. Die Regelgenauigkeit eines Drall- bzw. Reaktionsrads wird durch eine maximale Abweichung des Winkels zwischen dem simulierten perfekten Rad und dem beobachteten realen Rads beschrieben.

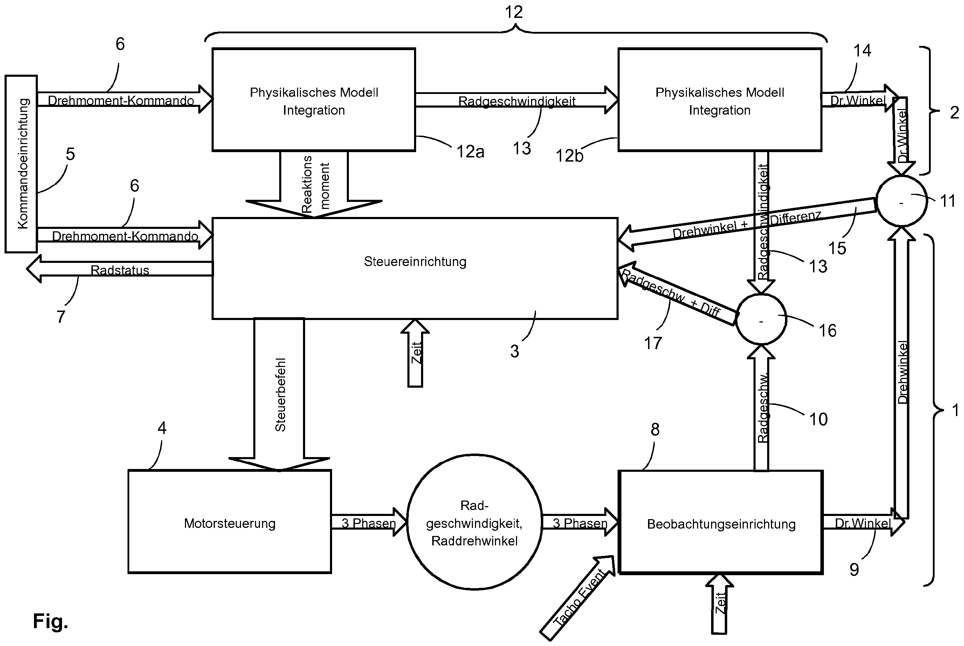

Diese und weitere Vorteile und Merkmale werden nachfolgend anhand eines Beispiels unter Zuhilfenahme der begleitenden Figur näher erläutert. Die **einzige Figur** zeigt in schematischer Form den Aufbau eines Steuerungssystems für eine Drallradeinrichtung zum Stabilisieren eines Raumflugkörpers.

Das Steuerungssystem besteht im Wesentlichen aus einer realen Drallradeinrichtung 1 und einer simulierten Drallradeinrichtung 2. Die reale Drallradeinrichtung 1 ist diejenige Drallradeinrichtung, die durch das Steuerungssystem im eigentlichen Sinne gesteuert werden soll und die zur Satellitenstabilisierung bzw. -ausrichtung genutzt wird. Sie ist im Prinzip in bekannter Weise aufgebaut und weist ein in der Figur nicht gezeigtes eigentliches Drall- oder Reaktionsrad auf, das durch einen ebenfalls nicht dargestellten Motor in Drehbewegung versetzt wird. Durch die Rotation des Drallrads und die dabei entstehende Kreiselwirkung wird der gewünschte stabilisierende Effekt erreicht. Eine hinsichtlich dem mechanischen Aufbau der realen Drallradeinrichtung 1 ähnliche Schwungradvorrichtung ist aus der DE 39 21 765 A1 bekannt.

Die reale Drallradeinrichtung 1 weist eine Steuereinrichtung 3 auf, zum Ansteuern einer eigentlichen Motorsteuerung 4, die wiederum die Leistungselektronik bzw. Stromregler für den Motor etc. aufweist.

Die Steuereinrichtung 3 kann in aufwändiger Weise gestaltet werden und in bekannter Weise geeignete Steuerungsmaßnahmen vornehmen, wie zum Beispiel das Beschleunigen oder Abbremsen des Drallrads sowie entsprechende Start- und Stoppfunktionen. Zudem ist es möglich, in der Steuereinrichtung 3 Information (z.B. Tabellen) zu hinterlegen, bei welchen Bedingungen (Drehgeschwindigkeit, Temperatur etc.), welche Lagerbedingungen (z.B. Lagerreibung) am Drallrad vorliegen. Wenn zum Beispiel der Satellit sich in einem sehr kalten Gebiet (Schatten) bewegt, werden die Drallrad-Lager abgekühlt, wodurch die Lagerreibung steigen kann. Zur Kompensation dieses Effekts kann die Steuereinrichtung 3 entsprechende Steuermaßnahmen ergreifen.

Der Steuereinrichtung 3 vorgelagert ist eine Kommandoeinrichtung 5, die zum Beispiel Teil der eigentlichen Satellitensteuerung sein kann. Hier wird zum Beispiel eine gewünschte Bewegung oder Ausrichtung des Satelliten voreingestellt, was zu einer entsprechenden Kommandierung der Drallradeinrichtung 1 führt. Dementsprechend gibt die Kommandoeinrichtung 5 ein Drehmoment-Kommando 6 an die Steuereinrichtung 3. Das Drehmoment ist dabei das physikalische Grundkommando der Geschwindigkeit und liegt der Änderung der Drehgeschwindigkeit des Drallrads zugrunde.

Die Steuereinrichtung 3 kann eine geeignete Statusinformation 7 an die übergeordnete Satellitensteuerung liefern, aus der sich zum Beispiel Informationen über den Radstatus, die Radgeschwindigkeit oder den Radwinkel ergeben.

Der von der Motorsteuerung 4 angesteuerte Motor bewirkt die Drehbewegung des realen Drallrads. Die Drehbewegung kann in geeigneter Weise gemessen werden. Zum Beispiel ist es bekannt, am Motor-Rotor Hall-Sensoren (z.B. drei Hall-Sensoren) vorzusehen, um die Drehposition des rotierenden Rades festzustellen. Aus der Drehposition (dem Raddrehwinkel) kann unter Berücksichtigung der Zeit unmittelbar auch die Raddrehgeschwindigkeit abgeleitet werden. Zu diesem Zweck ist eine Beobachtungseinrichtung 8 vorgesehen, die eine Drehwinkel-Erfassungseinrichtung und eine Drehzahl- bzw. Drehgeschwindigkeits-Erfassungseinrichtung umfasst. Zudem kann die Beobachtungseinrichtung 8 auch weitere Korrektur- oder Schätzverfahren bereitstellen, um die tatsächliche Position des Rads (den Raddrehwinkel) oder die Radgeschwindigkeit möglichst exakt zu erfassen. Aufgrund der hohen Drehgeschwindigkeit des Drallrads (z.B. 6000 Umdrehungen pro Minute) einerseits und der extrem hohen Anforderungen an die Messgenauigkeit andererseits (z.B. soll bei dieser hohen Drehgeschwindigkeit von z.B. 6000 min$^{-1}$ eine Genauigkeit von 0,005 Umdrehungen pro Minute erreicht werden), handelt es sich bei den Ergebnissen der Beobachtungseinrichtung 8 in der Regel nie um exakte Angaben, sondern stets um bestmögliche Schätzungen.

Als Ergebnis der Beobachtungseinrichtung 8 wird einerseits der reale Drehwinkel 9 und andererseits die reale Drehgeschwindigkeit 10 (Radgeschwindigkeit) ausgegeben.

Der reale Drehwinkel 9 wird an eine später noch erläuterte Vergleichseinrichtung 11 geliefert.

Parallel zu der somit beschriebenen realen Drallradeinrichtung 1 ist die simulierte Drallradeinrichtung 2 vorgesehen.

Sie basiert alleine auf einem idealen physikalischen Modell 12, nämlich der Zustandsgleichung für eine Drehbewegung, die zum Beispiel die folgende Form aufweisen kann:

$$\varphi \;=\; \varphi_{t0} \;+\; \omega_{to} \;\times\; \Delta t_1 \;+\; 0,5 \;\times\; \alpha_{to} \;\times\; \Delta t_1^2 \qquad\qquad (2)$$

wobei $\varphi$ der Drehwinkel, $\omega$ die Drehgeschwindigkeit (Winkelgeschwindigkeit), $\Delta t$ ein Zeitinkrement und $\alpha$ das Drehmoment einschließlich dem Trägheitsmoment ist.

Die simulierte Drallradeinrichtung 2 ist somit allein softwaremäßig realisiert, ohne "echte" mechanische Drallradkomponenten zu erfordern. Als Eingangsgröße für das physikalische Modell dient das gleiche Drehmoment-Kommando 6 von der Kommandoeinrichtung 5, das auch der Steuereinrichtung 3 zugeführt wird. Die Zuführung des Drehmomentkommandos 6 muss selbstverständlich gleichzeitig an die reale Drallradeinrichtung 1 und an die simulierte Drallradeinrichtung 2 erfolgen. In dem physikalischen Modell 12 erfolgt zunächst eine erste Integration 12a, so dass als Ergebnis eine simulierte Drehzahl bzw. Drehgeschwindigkeit 13 erhalten wird.

Die simulierte Drehgeschwindigkeit 13 wird einer zweiten Integration 12b unterzogen, wodurch ein simulierter Drehwinkel 14 erhalten wird. Dieser simulierte Drehwinkel 14 stellt einen idealen Wert aufgrund des idealen physikalischen Modells dar. Er ist gleichzeitig damit ein Zielwert, der durch die reale Drallradeinrichtung 1 erreicht werden sollte.

Zu diesem Zweck wird der simulierte Drehwinkel 14 ebenfalls der Vergleichseinrichtung 11 zugeführt, wo ein Vergleich zwischen dem simulierten Drehwinkel 14 und dem realen Drehwinkel 9 erfolgt. Die dabei festgestellte Differenz wird als Fehlersignal 15 an die Steuereinrichtung 3 zurückgeführt. Die Steuereinrichtung 3 ist dann wiederum in der Lage, die Motorsteuerung 4 und damit das reale Drallrad anzusteuern, um die Drehgeschwindigkeit des realen Drallrads zu verändern und den Fehler zwischen dem simulierten Drehwinkel 14 und dem realen Drehwinkel 9 zu verringern.

Die simulierte Drehgeschwindigkeit 13 kann zusammen mit der realen Drehgeschwindigkeit 10 einer Drehgeschwindigkeits-Vergleichseinrichtung 16 zugeführt werden. Die Drehgeschwindigkeits-Vergleichseinrichtung 16 ermittelt eine Abweichung zwischen den Werten und kann dementsprechend ein Drehgeschwindigkeits-Abweichungssignal 17 an die Steuereinrichtung 3 liefern. Dieses Signal kann von der Steuereinrichtung 3 als Information weiterverarbeitet werden. Für die eigentliche Drallradsteuerung ist es jedoch nachrangig, weil diese allein aufgrund der ermittelten Drehwinkel 9, 14 bzw. deren Abweichungen voneinander erfolgt.

## Patentansprüche

1. Steuerungssystem für eine Drallradeinrichtung zum Stabilisieren eines Raumflugkörpers, wobei

- die Drallradeinrichtung eine reale Drallradeinrichtung (1) ist und ein von einem Motor angetriebenes Drallrad aufweist;
- eine simulierte Drallradeinrichtung (2) vorgesehen ist, die das Verhalten eines idealen Drallrads auf der Basis eines idealen physikalischen Modells (12) simuliert;
- eine Steuereinrichtung (3) vorgesehen ist, zum Ansteuern des Motors der realen Drallradeinrichtung (1);
- eine Kommandoeinrichtung (5) vorgesehen ist, zum Vorgeben eines Drehmoment-Kommandos (6) zum Verändern der Drehzahl sowohl der realen Drallradeinrichtung (1) als auch der simulierten Drallradeinrichtung (2);
**dadurch gekennzeichnet, daß** im Steuerungssystem:

- eine Drehwinkel-Erfassungseinrichtung (8) vorgesehen ist, zum Erfassen des realen Drehwinkels (9) der realen Drallradeinrichtung (1);
- eine Integrationseinrichtung (12a. 12b) vorgesehen ist, zum Berechnen eines simulierten Drehwinkels (14) der simulierten Drallradeinrichtung (2) aufgrund des vorgegebenen Drehmoment-Kommandos (6);
- eine Vergleichseinrichtung (11) vorgesehen ist, zum Vergleichen des realen Drehwinkels (9) und des simulierten Drehwinkels (14) und Erzeugen eines einer Abweichung zwischen dem realen Drehwinkel (9) und dem simulierten Drehwinkel (14) entsprechenden Fehlersignals (15); und wobei
- das Fehlersignal (15) zu der Steuereinrichtung (3) führbar ist, zum Ansteuern des Motors aufgrund des Fehlersignals (15), um die Abweichung zu verringern.

2. Steuerungssystem nach Anspruch 1, wobei die Kommandoeinrichtung (5) ausgebildet ist, um das Drehmoment-Kommando (6) an die Steuereinrichtung (3) für die reale Drallradeinrichtung (1) sowie an die simulierte Drallradeinrichtung (2) zu übermitteln.

3. Steuerungssystem nach einem der vorstehenden Ansprüche, wobei die Simulation des Verhaltens eines idealen Drallrads auf der Basis des idealen physikalischen Modells (12) ohne Berücksichtigung von Reibung erfolgt.

4. Steuerungssystem nach einem der vorstehenden Ansprüche, wobei das ideale physikalische Modell einer Zustandsgleichung einer Drehbewegung entspricht.

5. Steuerungssystem nach einem der vorstehenden Ansprüche, wobei die Zustandsgleichung die Form aufweist:

$$\varphi = \varphi_{t0} + \omega_{to} \times \Delta t_1 + 0{,}5 \times \alpha_{to} \times \Delta t_1^2$$

wobei φ der Drehwinkel, ω die Drehgeschwindigkeit (Winkelgeschwindigkeit), Δt ein Zeitinkrement und α das Drehmoment einschließlich dem Trägheitsmoment ist.

6. Steuerungssystem nach einem der vorstehenden Ansprüche, wobei die Integrationseinrichtung (12a, 12b) ausgebildet ist, um durch eine zweifache Integration des Drehmoment-Kommandos den simulierten Drehwinkel (14) zu berechnen.

7. Steuerungssystem nach einem der vorstehenden Ansprüche, wobei eine Motorsteuerung (4) vorgesehen ist, die durch die Steuereinrichtung (3) ansteuerbar ist und ihrerseits zum Betreiben des Motors dient.

8. Steuerungssystem nach einem der vorstehenden Ansprüche, wobei eine Drehgeschwindigkeits-Erfassungseinrichtung vorgesehen ist, zum Erfassen der realen Drehgeschwindigkeit (10) der realen Drallradeinrichtung (1).

9. Steuerungssystem nach Anspruch 8, wobei

- eine die Drehwinkel-Erfassungseinrichtung und die Drehgeschwindigkeits-Erfassungseinrichtung zusammenfassende Beobachtungseinrichtung (8) vorgesehen ist, zum Ermitteln der realen Drehgeschwindigkeit (10) und/oder des realen Drehwinkels (9) der realen Drallradeinrichtung (1); und wobei
- die Beobachtungseinrichtung (8) ausgebildet ist, um eine Fehlerkorrektur der Drehgeschwindigkeit (10) und/oder des Drehwinkels (9) der realen Drallradeinrichtung (1) durchzuführen.

10. Steuerungssystem nach Anspruch 8 oder 9, wobei

- die Integrationseinrichtung (12a) ausgebildet ist, durch einfache Integration des vorgegebenen Drehmoment-Kommandos (6) eine simulierten Drehgeschwindigkeit (13) der simulierten Drallradeinrichtung (2) zu berechnen; und wobei
- eine Drehgeschwindigkeits-Vergleichseinrichtung (16) vorgesehen ist, zum Vergleichen der realen Drehgeschwindigkeit (10) und der simulierten Drehgeschwindigkeit (13) und Erzeugen eines einer Abweichung zwischen der realen Drehgeschwindigkeit und der simulierten Drehgeschwindigkeit entsprechenden Drehgeschwindigkeits-Abweichungssignals (17).

11. Steuerungsverfahren zum Ansteuern einer Drallradeinrichtung zum Stabilisieren eines Raumflugkörpers, mit den Schritten:

- Bereitstellen der Drallradeinrichtung als reale Drallradeinrichtung (1) mit einem von einem Motor angetriebenen Drallrad;
- Bereitstellen einer simulierten Drallradeinrichtung (2) auf der Basis eines idealen physikalischen Modells (12);
- Gleichzeitiges Zuführen eines Drehmoment-Kommandos (6) zu der realen Drallradeinrichtung (1) und zu der simulierten Drallradeinrichtung (2) zum Ändern ihrer jeweiligen Drehgeschwindigkeit;
- Ansteuern des Motors zum Ändern der Drehgeschwindigkeit in Abhängigkeit von dem zugeführten Drehmoment-Kommando (6);

gekennzeichnet durch folgende Schritte:

- Erfassen eines realen Drehwinkels (9) der realen Drallradeinrichtung (1);
- Berechnen eines simulierten Drehwinkels (13) der simulierten Drallradeinrichtung (2) durch zweifache Integration des zugeführten Drehmoment-Kommandos (6);
- Vergleichen des realen Drehwinkels (9) und des simulierten Drehwinkels (13) und Erzeugen eines einer Abweichung zwischen dem realen Drehwinkel und dem simulierten Drehwinkel entsprechenden Fehlersignals (15); und

- Ansteuern des Motors aufgrund des Fehlersignals (15), um die Abweichung zu verringern.

**Claims**

1. A control system for a momentum wheel device for stabilizing a spacecraft, wherein

   - the momentum wheel device is a real momentum wheel device (1) including a momentum wheel driven by a motor;
   - a simulated momentum wheel device (2) is provided that simulates a behavior of an ideal momentum wheel based on an ideal physical model (12);
   - a control device (3) is provided that controls the motor of the real momentum wheel device (1);
   - a command device (5) is provided that specifies a torque command (6) to change a speed of both the real momentum wheel device (1) and of the simulated momentum wheel device (2); **characterized in that** in the command device:
   - a rotation angle detection device (8) is provided that detects a real rotation angle (9) of the real momentum wheel device (1);
   - an integration device (12a, 12b) is provided that calculates a simulated rotation angle (14) of the simulated momentum wheel device (2) due to the given torque command (6);
   - a comparator device (11) is provided that compares the real rotation angle (9) and the simulated rotation angle (14) and generates an error signal (15) corresponding to a deviation between the real rotation angle (9) and the simulated rotation angle (14); and wherein
   - the error signal (15) can be fed to the control device (3) to control the motor due to the error signal (15) in order to reduce the deviation.

2. The control system of claim 1, wherein the command device (5) is configured to transmit the torque command (6) to the control device (3) for the real momentum wheel device (1) and to the simulated momentum wheel device (2).

3. The control system according to any one of the preceding claims, wherein the simulation of the behavior of the ideal momentum wheel is conducted based on the ideal physical model (12), without accounting for friction.

4. The control system according to any one of the preceding claims, wherein the ideal physical model corresponds to an equation of state of a rotational movement.

5. The control system according to any one of the preceding claims, wherein the equation of state has the following form:

$$\varphi = \varphi_{t0} + \omega_{to} \times \Delta t_1 + 0{,}5 \times \alpha_{to} \times \Delta t_1^2$$

   wherein $\varphi$ is the rotation angle, $\omega$ is the rotational or angular speed, $\Delta t$ is a time increment, and $\alpha$ is the torque inclusive of the moment of inertia.

6. The control system according to any one of the preceding claims, wherein the integration device (12a, 12b) is configured to calculate the simulated rotation angle (14) by two-fold integration of the torque command.

7. The control system according to any one of the preceding claims, wherein a motor control (4) is provided which can be controlled by the control device (3) and, in turn, serves to operate the motor.

8. The control system according to any one of the preceding claims, further comprising a rotational speed detection device configured to detect the real rotational speed (10) of the real momentum wheel device (1).

9. The control system of claim 8, wherein:

   - an observation device (8) combining the rotation angle detection device and the rotational speed detection device is configured to determine the real rotational speed (10) and/or the real rotation angle (9) of the real momentum wheel device (1), and wherein
   - the observation device (8) is further configured to perform an error correction of the rotational speed (10) and/or of the rotation angle (9) of the real momentum wheel device (1).

EP 3 830 650 B1

**10.** The control system of claim 8 or 9, wherein

- the integration device (12a) is configured to calculate a simulated rotational speed (13) of the simulated momentum wheel device (2) by simple integration of the given torque command (6), and wherein
- a rotational speed comparator device (16) is provided and configured to compare the real rotational speed (10) and the simulated rotational speed (13), and to generate a rotational speed deviation signal (17) corresponding to a deviation between the real rotational speed and the simulated rotational speed.

**11.** A control method for controlling a momentum wheel device for stabilizing a spacecraft, the method comprising:

- providing the momentum wheel device as a real momentum wheel device (1) comprising a momentum wheel driven by a motor;
- providing a simulated momentum wheel device (2) based on an ideal physical model (12);
- concurrent feeding of a torque command (6) to the real momentum wheel device (1) and to the simulated momentum wheel device (2) to change their re-specitive rotational speed;
- controlling the motor to change the rotational speed dependent on the fed torque command (6);

**characterized by** the following steps:

- detecting a real rotation angle (9) of the real momentum wheel device (1);
- calculating a simulated rotation angle (13) of the simulated momentum wheel device (2) by two-fold integration of the fed torque command (6);
- comparing the real rotation angle (9) and the simulated rotation angle (13) and generating an error signal (15) corresponding to a deviation between the real rotation angle and the simulated rotation angle; and
- controlling the motor due to the error signal (15) to reduce the deviation.

**Revendications**

**1.** Système de commande pour un dispositif à volant d'inertie pour stabiliser un engin spatial, dans lequel

- le dispositif à volant d'inertie est un dispositif à volant d'inertie réel (1) et présente un volant d'inertie entraîné par un moteur ;
- un dispositif à volant d'inertie simulé (2) est prévu, qui simule le comportement d'un volant d'inertie idéal sur la base d'un modèle physique idéal (12) ;
- un dispositif de commande (3) est prévu pour commander le moteur du dispositif à volant d'inertie réel (1) ;
- un dispositif d'instruction (5) est prévu pour spécifier une instruction de couple (6) pour modifier la vitesse de rotation aussi bien du dispositif à volant d'inertie réel (1) que du dispositif à volant d'inertie simulé (2) ; **caractérisé en ce que** dans le système de commande :

- un dispositif de détection d'angle de rotation (8) est prévu pour détecter l'angle de rotation réel (9) du dispositif à volant d'inertie réel (1) ;
- un dispositif d'intégration (12a, 12b) est prévu pour calculer un angle de rotation simulé (14) du dispositif à volant d'inertie simulé (2) sur la base de l'instruction de couple (6) spécifiée ;
- un dispositif de comparaison (11) est prévu pour comparer l'angle de rotation réel (9) et l'angle de rotation simulé (14) et générer un signal d'erreur (15) correspondant à un écart entre l'angle de rotation réel (9) et l'angle de rotation simulé (14) ; et dans lequel
- le signal d'erreur (15) peut être acheminé au dispositif de commande (3) pour commander le moteur sur la base du signal d'erreur (15) afin de réduire l'écart.

**2.** Système de commande selon la revendication 1, dans lequel le dispositif d'instruction (5) est agencé pour transmettre l'instruction de couple (6) au dispositif de commande (3) pour le dispositif à volant d'inertie réel (1) ainsi qu'au dispositif à volant d'inertie simulé (2) .

**3.** Système de commande selon l'une des revendications précédentes, dans lequel la simulation du comportement d'un volant d'inertie idéal sur la base du modèle physique idéal (12) a lieu sans prise en considération du frottement.

**4.** Système de commande selon l'une des revendications précédentes, dans lequel le modèle physique idéal corres-

9

pond à une équation d'état d'un mouvement de rotation.

5. Système de commande selon l'une des revendications précédentes, dans lequel l'équation d'état présente la forme :

$$\varphi = \varphi_{t0} + \omega_{t0} \times \Delta t_1 + 0{,}5 \times \alpha_{t0} \times \Delta t_1^2$$

dans lequel $\varphi$ est l'angle de rotation, $\omega$ la vitesse de rotation (vitesse angulaire), $\Delta t$ un incrément de temps et $\alpha$ le couple y compris le couple d'inertie.

6. Système de commande selon l'une des revendications précédentes, dans lequel le dispositif d'intégration (12a, 12b) est agencé pour calculer l'angle de rotation simulé (14) par une double intégration de l'instruction de couple.

7. Système de commande selon l'une des revendications précédentes, dans lequel une commande de moteur (4) est prévue, qui peut être commandée par le dispositif de commande (3) et sert de son côté à l'exploitation du moteur.

8. Système de commande selon l'une des revendications précédentes, dans lequel un dispositif de détection de vitesse de rotation est prévu pour détecter la vitesse de rotation réelle (10) du dispositif à volant d'inertie réel (1).

9. Système de commande selon la revendication 8, dans lequel

- un dispositif d'observation (8) regroupant le dispositif de détection d'angle de rotation et le dispositif de détection de vitesse de rotation est prévu pour déterminer la vitesse de rotation réelle (10) et/ou l'angle de rotation réel (9) du dispositif à volant d'inertie réel (1) ; et dans lequel
- le dispositif d'observation (8) est agencé pour effectuer une correction d'erreur de la vitesse de rotation (10) et/ou de l'angle de rotation (9) du dispositif à volant d'inertie réel (1).

10. Système de commande selon la revendication 8 ou 9, dans lequel

- le dispositif d'intégration (12a) est agencé pour calculer une vitesse de rotation simulée (13) du dispositif à volant d'inertie simulé (2) par intégration simple de l'instruction de couple (6) spécifiée ; et dans lequel
- un dispositif de comparaison de vitesse de rotation (16) est prévu pour comparer la vitesse de rotation réelle (10) et la vitesse de rotation simulée (13) et générer un signal d'écart de vitesse de rotation (17) correspondant à un écart entre la vitesse de rotation réelle et la vitesse de rotation simulée.

11. Procédé de commande pour la commande d'un dispositif à volant d'inertie pour stabiliser un engin spatial, comprenant les étapes de :

- préparer le dispositif à volant d'inertie en tant que dispositif à volant d'inertie réel (1) avec un volant d'inertie entraîné par un moteur ;
- préparer un dispositif à volant d'inertie simulé (2) sur la base d'un modèle physique idéal (12) ;
- acheminer simultanément une instruction de couple (6) au dispositif à volant d'inertie réel (1) et au dispositif à volant d'inertie simulé (2) pour modifier leur vitesse de rotation respective ;
- commander le moteur pour modifier la vitesse de rotation en fonction de l'instruction de couple (6) acheminée ;

**caractérisé par** les étapes suivantes :

- détecter un angle de rotation réel (9) du dispositif à volant d'inertie réel (1) ;
- calculer un angle de rotation simulé (13) du dispositif à volant d'inertie simulé (2) par double intégration de l'instruction de couple (6) acheminée ;
- comparer l'angle de rotation réel (9) et l'angle de rotation simulé (13) et générer un signal d'erreur (15) correspondant à un écart entre l'angle de rotation réel et l'angle de rotation simulé ; et
- commander le moteur sur la base du signal d'erreur (15) afin de réduire l'écart.

Fig.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3921765 A1
- DE 3214378 A1